(19) Europäisches Patentamt
European Patent Office
Office européen des brevets

(11) Veröffentlichungsnummer: **0 477 328 B1**

# (12) EUROPÄISCHE PATENTSCHRIFT

(45) Veröffentlichungstag der Patentschrift: **15.03.95**

(51) Int. Cl.$^{6}$: **C09K 19/30**, C09K 19/44

(21) Anmeldenummer: **91907397.3**

(22) Anmeldetag: **12.04.91**

(86) Internationale Anmeldenummer:
**PCT/EP91/00693**

(87) Internationale Veröffentlichungsnummer:
**WO 91/16397 (31.10.91 91/25)**

## (54) FLÜSSIGKRISTALLINES MEDIUM.

(30) Priorität: **13.04.90 DE 4012025**

(43) Veröffentlichungstag der Anmeldung:
**01.04.92 Patentblatt 92/14**

(45) Bekanntmachung des Hinweises auf die Patenterteilung:
**15.03.95 Patentblatt 95/11**

(84) Benannte Vertragsstaaten:
**DE FR GB IT**

(56) Entgegenhaltungen:
**EP-A- 0 074 608**
**EP-A- 0 194 879**
**EP-A- 0 318 003**
**WO-A-91/03446**
**DE-A- 4 025 550**

(73) Patentinhaber: **MERCK PATENT GmbH**
**Postfach,**
**Frankfurter Strasse 250**
**D-64271 Darmstadt (DE)**

(72) Erfinder: **RIEGER, Bernhard WACORE - Tamagawagakuen**
**2834 Ootadaira, Nara-machi**
**Midori-ku**
**Yokohama-shi**
**Kanagawa-pref. 227 (JP)**
Erfinder: **HITTICH, Reinhard**
**Am Kirchberg 11**
**D-6101 Modautal 1 (DE)**
Erfinder: **KURMEIER, Hans-Adolf**
**Hinter der Schule 3a**
**D-6104 Seeheim-Jugenheim (DE)**
Erfinder: **COATES, David 87 Sopwith Crescent**
**Merley, Wimborne**
**Dorset BH21 3SW (GB)**
Erfinder: **PLACH, Herbert**
**Wingertsbergstr. 5**
**D-6100 Darmstadt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft ein flüssigkristallines Medium, dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-zellen (Deformation aufgerichteter Phasen), Gast/Wirt-Zellen, TN-Zellen mit verdrillt nematischer ("twisted nematic") Struktur, STN-Zellen ("super-twisted nematiic"), SBE-Zellen ("super-birefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben. Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand guter UV- und Temperaturstabilitat des Widerstands und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:

1. MOS (Metal Oxide Semiconductor)-Transistoren auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SKIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das

Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, daß der spezifische Widerstand eine möglichst geringe Zunahme bei steigender Temperatur sowie nach Temperatur- und/oder UV-Belastung zeigt. Die MFK-Anzeigen aus dem Stand der Technik genügen nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:

- erweiterter nematischer Phasenbereich (insbesondere zu tiefen Temperaturen)
- Schaltbarkeit bei extrem tiefen Temperaturen (out-door-use, Automobil, Avionik)
- Erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr hohe spezifische Widerstände und niedrige Schwellenspannungen aufweisen.

Es wurde nun gefunden, daß diese Aufgabe gelöst werden kann, wenn man in Anzeigen erfindungsgemäße Medien verwendet. Gegenstand der Erfindung ist somit ein flüssigkristallines Medium auf der Basis eines Gemisches von polaren Verbindungen mit positiver dielektrischer Anisotropie, dadurch gekennzeichnet, daß es eine oder mehrere Verbindungen der allgemeinen Formel I

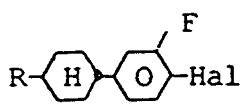

I

enthält, worin Hal Fluor oder Chlor und R Alkyl, Oxaalkyl, Fluoralkyl oder Alkenyl mit jeweils bis zu 7 C-Atomen bedeutet, und

zusätzlich eine oder mehrere Verbindungen ausgewählt aus der Gruppe bestehend aus den allgemeinen Formeln II. III und IV enthält:

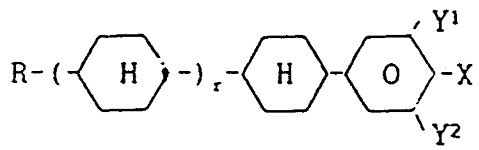

II

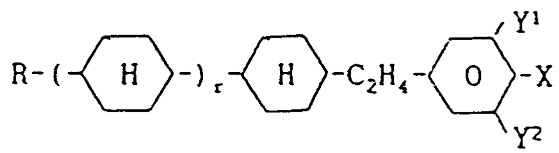

III

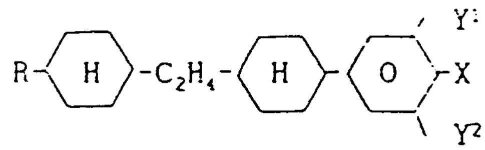

IV

worin die einzelnen Reste die folgenden Bedeutungen haben:

| | |
|---|---|
| R: | Alkyl, Oxaalkyl, Fluoralkyl oder Alkenyl mit jeweils bis zu 7 C-Atomen |
| X: | F, Cl, $CF_3$, $OCF_3$ oder $OCHF_2$ |
| $Y^1$ und $Y^2$ | jeweils unabhängig voneinander H oder F |
| r: | 0 oder 1. |

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes.

Die erzielbaren Kombinationen aus Klärpunkt, Viskosität bei tiefer Temperatur, thermischer und UV-Stabilität und dielektrischer Anisotropie bzw. Schwellenspannung übertreffen bei weitem bisherige Materialien aus dem Stand der Technik.

Die Forderung nach hohem Klärpunt, nematischer Phase bei -40 °C sowie einem hohen $\Delta\epsilon$ konnte bislang nur unzureichend erfüllt werden. Systeme wie z.B. ZLI-3119 weisen zwar vergleichbaren Klärpunkt und vergleichbar günstige Viskositäten auf, besitzen jedoch ein $\Delta\epsilon$ von nur +3.

Die erfindungsgemäßen Flüssigkristallmischungen ermöglichen es bei niedrigen Viskositäten bei tiefen Temperaturen (bei -30 °C $\leqq$ 600, vorzugsweise $\leqq$ 550 mPa.S; bei -40 °C $\leqq$ 1800, vorzugsweise $\leqq$ 1700 mPa.s) gleichzeitig dielektrische Anisotropiewerte $\Delta\epsilon \geqq 3{,}5$, vorzugsweise $\geqq 4{,}0$, Klärpunkte oberhalb 65°, vorzugsweise oberhalb 70° und einen hohen Wert für den Spezifischen Widerstand zu erreichen, wodurch hervorragende STN- und MFK-Anzeigen erzielt werden können.

Es versteht sich, daß durch geeignete Wahl der Komponenten der erfindungsgemäßen Mischungen auch höhere Klärpunkte (z.B. oberhalb 90°) bei höheren Schwellenspannung oder niedrigere Klärpunkte bei niedrigeren Schwellenspannungen unter Erhalt der anderen vorteilhaften Eigenschaften realisiert werden können. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Viskosität bei 20 °C ist vorzugsweise ≦ 25 mPa.s. Der nematische Phasenbereich ist vorzugsweise mindestens 70°, insbesondere mindestens 80°. Vorzugsweise erstreckt sich dieser Bereich mindestens von -30° bis +70°.

Messungen des "Capacity Holding Ratio " (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, daß erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel

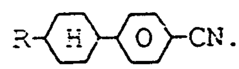

Auch die UV-Stabilität der erfindungegemäßen Mischungen ist erheblich besser, d. h. sie zeigen eine deutlich kleinere Abnahme des HR unter UV-Belastung.

Die erfindungsgemäßen Medien zeichnen sich neben ungewöhnlich weitem nematischen Phasenbereich auch durch außerordentlich hohe elastische Konstanten bei sehr günstigen Viskositätswerten aus, wodurch insbesondere bei Verwendung in STN-Anzeigen deutlich Vorteile gegenüber Medien aus dem Stand der Technik resultieren.

Vorzugsweise basieren die erfindungsgemäßen Medien auf mehreren (vorzugsweise zwei oder mehr) Verbindungen der Formel I, d.h. der Anteil dieser Verbindungen ist ≧ 25 %, vorzugsweise ≧ 40 %.

Die einzelnen Verbindungen der Formeln I bis XIV und deren Unterformeln, die in den erfindungsgemäßen Medien verwendet werden können, sind entweder bekannt, oder sie können analog zu den bekannten Verbindungen hergestellt werden.

Bevorzugte Ausführungsformen sind im folgenden angegeben:

- Medium enthält gegebenenfalls eine oder mehrere Verbindungen ausgewählt aus der Gruppe bestehend aus den allgemeinen Formeln V bis VIII:

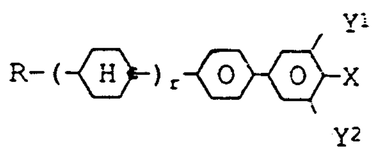

V

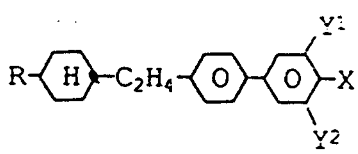

VI

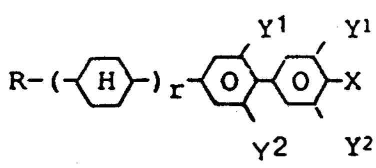

VII

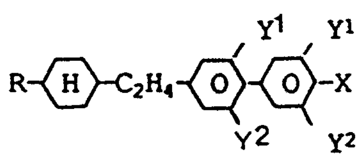

VIII

  worin R, X, $Y^1$ und $Y^2$ jeweils unabhängig voneinander eine der in Anspruch 1 angegebene Bedeutung haben.

- Medium enthält gegebenenfalls eine oder mehrere Verbindungen ausgewählt aus der Gruppe bestehend aus den allgemeinen Formeln IX bis XIV:

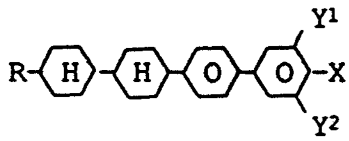

IX

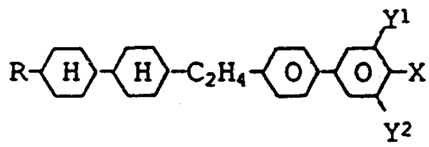

X

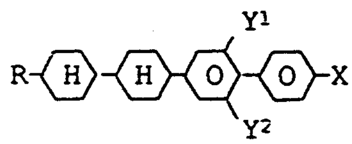

XI

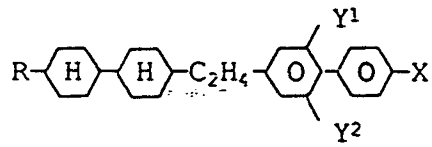

XII

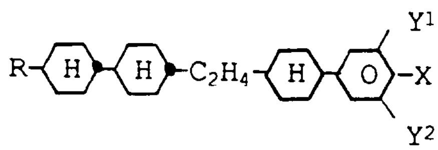

XIII

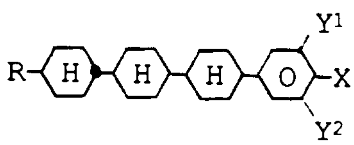

XIV

worin R, X, $Y^1$ und $Y^2$ jeweils unabhängig voneinander eine der in Anspruch 1 angegebene Bedeutung haben.

- Der Anteil an Verbindungen der Formeln I bis IV zusammen beträgt im Gesamtgemisch mindestens 50 Gew.-%
- der Anteil an Verbindungen der Formel I beträgt im Gesamtgemisch 10 bis 50 Gew.-%
- der Anteil an Verbindungen dem Formeln II bis IV im Gesamtgemisch beträgt 30 bis 70 Gew.-%
-

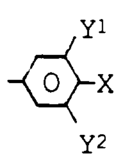 ist 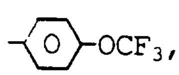, 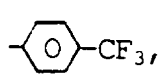, 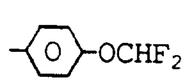,

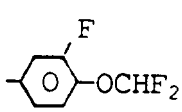, 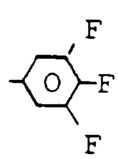, 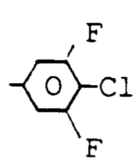, 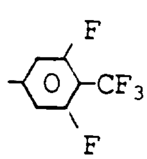, 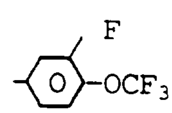,

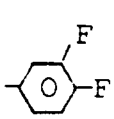 oder 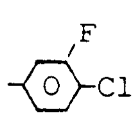

- das Medium enthält Verbindungen der Formeln II und III oder IV
- R ist geradkettiges Alkyl oder Alkenyl mit 2 bis 7 C-Atomen
- das Medium besteht im wesentlichen aus Verbindungen der Formeln I bis IV
- das Medium enthält weitere Verbindungen, vorzugsweise ausgewählt aus der folgenden Gruppe:

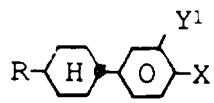

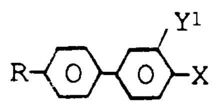

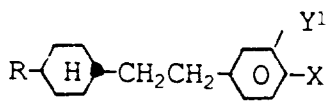

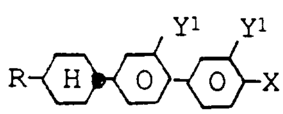

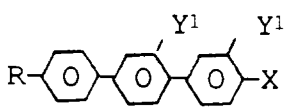

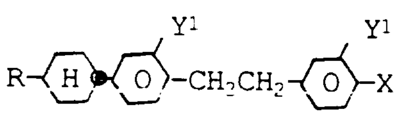

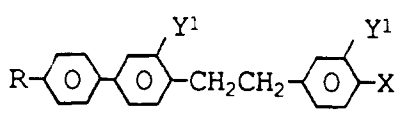

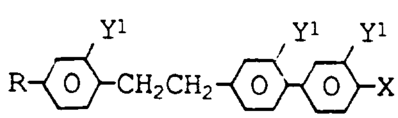

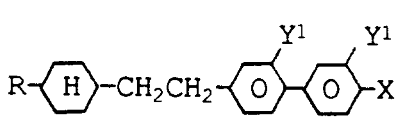

- Das Gewichtsverhältnis I: (II + III + IV) ist vorzugsweise 1 : 4 bis 1 : 1.
- Medium besteht im wesentlichen aus Verbindungen ausgewählt aus der Gruppe bestehend aus den allgemeinen Formeln I bis XIV.

Es wurde gefunden, daß bereits ein relativ geringer Anteil an Verbindungen der Formel I im Gemisch mit üblichen Flüssigkristallmaterialien, insbesondere jedoch mit einer oder mehreren Verbindungen der

Formel II, III und/oder IV zu einer beträchtlichen Verbesserung der Ansprechzeiten und zu niedrigen Schwellenspannungen führt, wobei gleichzeitig breite nematische Phasen mit tiefen Übergangstemperaturen smektischnematisch beobachtet werden. Die Verbindungen der Formeln I bis IV sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppe mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besonders Alkenylgruppen sind $C_2$-$C_7$-1E-Alkenyl, $C_4$-$C_7$-3E-Alkenyl, $C_5$-$C_7$-4-Alkenyl, $C_6$-$C_7$-5-Alkenyl und $C_7$-6-Alkenyl, insbesondere $C_2$-$C_7$-1E-Alkenyl, $C_4$-$C_7$-3E-Alkenyl und $C_5$-$C_7$-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel $C_nH_{2n+1}$-O-$(CH_2)_m$, worin n und m jeweils unabhängig voneinander 1 bis 6 bedeuten. Vorzugsweise ist n = 1 und m 1 bis 6.

Durch geeignete Wahl der Bedeutungen von R, X und Y können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten $k_{33}$ (bend) und $k_{11}$ (splay) im Vergleich zu Alkyl- bzw. Alkoxyresten. 4-Alkenylreste, 3-Alkenylreste und der- gleichen ergeben im allgemeinen tiefere Schwellenspannungen und kleinere Werte von $k_{33}/k_{11}$ im Vergleich zu Alkyl- und Alkoxyresten. Eine Gruppe $-CH_2CH_2-$ in $Z^1$ bzw. $Z^2$ führt im allgemeinen zu höheren Werte von $k_{33}/k_{11}$ im Vergleich zu einer einfachen Kovalenzbindung. Höhere Werte von $k_{33}/k_{11}$ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV hängt weitgehend von den gewünschten Eigenschaften, von der Wahl der Komponenten der Formeln I, II, III und/oder IV und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis XIV in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XIV ist.

In einer besonders bevorzugten Ausführungsform enthalten die erfindungsgemäßen Medien Verbindungen der Formel II, III, V und/oder VII (vorzugsweise II und/oder III), worin X $CF_3$, $OCF_3$ oder $OCHF_2$ bedeutet. Eine günstige synergistische Wir- kung mit den Verbindungen der Formel I führt zu besonders vorteilhaften Eigenschaften.

Für STN-Anwendungen enthalten die Medien vorzugsweise Verbindungen ausgewählt aus der Gruppe bestehend aus den Formeln V bis VIII, worin X vorzugsweise $OCHF_2$ bedeutet.

Die erfindungsgemäßen Medien können ferner eine Komponente A enthalten bestehend aus einer oder mehreren Verbindungen mit einer dielektrischen Anisotropie von -1,5 bis +1,5 der allgemeinen Formel I',

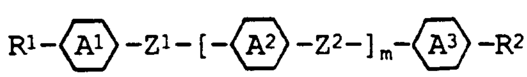

I'

worin

| | |
|---|---|
| $R^1$ und $R^2$ | jeweils unabhängig voneinander n-Alkyl, n-Alkoxy, ω-Fluor-alkyl oder n-Alkenyl mit bis zu 9 C-Atomen, |
| die Ringe $A^1$, $A^2$ und $A^3$ | jeweils unabhängig voneinander 1,4-Phenylen, 2- oder 3-Fluor-1,4-phenylen, trans-1,4-Cyclohexylen oder 1,4-Cyclohexenylen, |
| $Z^1$ und $Z^2$ | jeweils unabhängig voneinander $-CH_2CH_2-$, -C≡E-, -CO-O-, -O-CO-, oder eine |

Einfachbindung,

und

m 0, 1 oder 2 bedeutet.

Komponente A enthält vorzugsweise eine oder mehrere Verbindungen ausgewählt aus der Gruppe bestehend aus II1 bis II7:

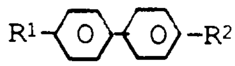

II1

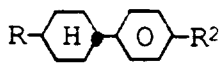

II2

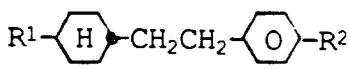

II3

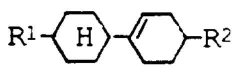

II4

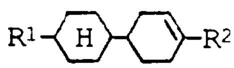

II5

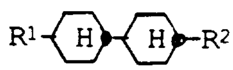

II6

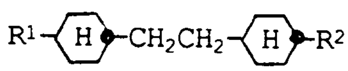

II7

worin $R^1$ und $R^2$ die bei Formel I' angegebene Bedeutung haben.

Vorzugsweise enthält Komponente A zusätzlich eine oder mehrere Verbindungen ausgewählt aus der Gruppe bestehend aus II8 bis II20:

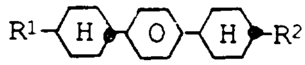

II8

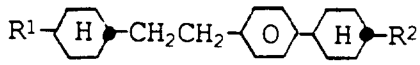

II9

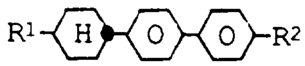

II10

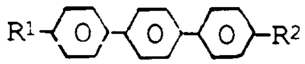

II11

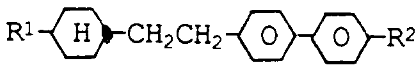

II12

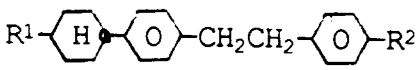

II13

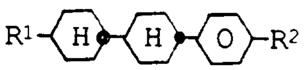

II14

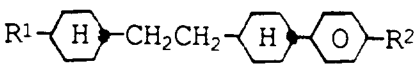

II15

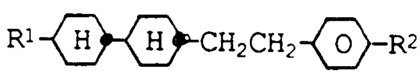

II16

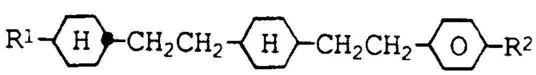

II17

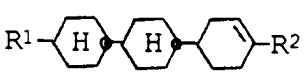

II18

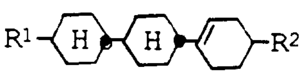

II19

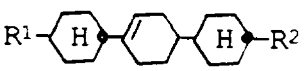

II20

worin $R^1$ und $R^2$ die bei Formel I' angegebene Bedeutung haben und die 1,4-Phenylengruppen in II8 bis II17 jeweils unabhängig voneinander auch durch Fluor ein- oder mehrfach substituiert sein können.

Ferner enthält Komponente A vorzugsweise zusätzlich eine oder mehrere Verbindungen ausgewählt aus der Gruppe bestehend aus II21 bis II25 enthält:

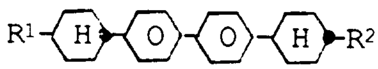 II21

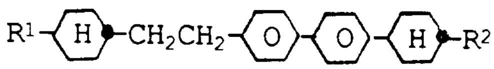 II22

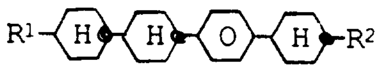 II23

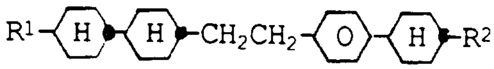 II24

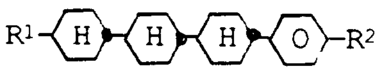 II25

worin $R^1$ und $R^2$ die bei Formel I' angegebene Bedeutung haben und die 1,4-Phenylengruppen in II21 bis II25 jeweils unabhängig voneinander auch durch Fluor ein- oder mehrfach substituiert sein können.

Schließlich sind derartige Mischungen bevorzugt, deren Komponente A eine oder mehrere Verbindungen ausgewählt aus der Gruppe bestehend aus II26 und II27 enthält:

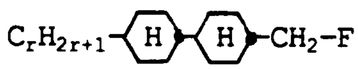 II26

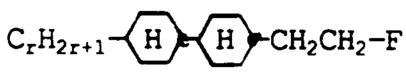 II27

worin $C_rH_{2r+1}$ eine geradkettige Alkylgruppe mit bis zu 7 C-Atomen ist.

In einigen Fällen erweist sich der Zusatz von Verbindungen der Formel,

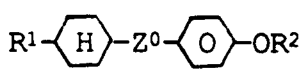

worin

$R^1$ und $R^2$ die bei Formel I' angegebene Bedeutung haben

und

$Z^0$ eine Einfachbindung, $-CH_2CH_2-$,

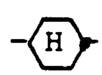

oder

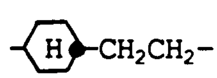

bedeutet,

zur Unterdrückung smektischer Phasen als vorteilhaft, obwohl hierdurch der spezifische Widerstand erniedrigt werden kann. Zur Erzielung von für die Anwendung optimaler Parameterkombinationen kann der Fachmann leicht feststellen, ob und falls ja in welcher Menge diese Verbindungen zugesetzt sein können.

Normalerweise werden weniger als 15 %, insbesondere 5-10 % verwendet.

Ferner bevorzugt sind Flüssigkristallmischungen, die eine oder mehrere Verbindungen ausgewählt aus der Gruppe bestehend aus III' und IV' enthalten,

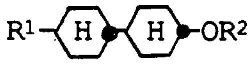

III'

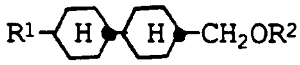

IV'

worin $R^1$ und $R^2$ die bei Formel I' angegebene Bedeutung haben.

Die Art und Menge der polaren Verbindungen mit positiver dielektrischer Anisotropie ist an sich nicht kritisch. Der Fachmann kann unter einer großen Palette bekannter und in vielen Fällen auch kommerziell verfügbarer Komponenten und Basisgemische in einfachen Routineversuchen geeignete Materialien auswählen. Vorzugsweise enthalten die erfindungsgemäßen Medien eine oder mehrere Verbindungen der Formel I'',

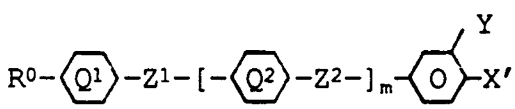

I''

worin $Z^1$, $Z^2$ und m die bei Formel I' angegebene Bedeutung haben, $Q^1$ und $Q^2$ jeweils unabhängig voneinander 1,4-Phenylen, trans-1,4-Cyclohexylen oder 3-Fluor-1,4-phenylen oder einer der Reste $Q^1$ und $Q^2$ auch trans-1,3-Dioxan-2,5-diyl, Pyrimidin-2,5-diyl, Pyridin-2,5-diyl oder 1,4-Cyclohexenylen bedeutet, $R^0$ n-Alkyl, n-Alkenyl, n-Alkoxy oder n-Oxaalkyl mit jeweils bis zu 9 C-Atomen, Y H oder F und X' CN, Halogen, $CF_3$, $OCF_3$ oder $OCHF_2$ ist.

In einer bevorzugten Ausführungsform basieren die erfindungsgemäßen Medien für STN- oder TN-Anwendungen auf Verbindungen der Formel I'' worin X' CN bedeutet. Es versteht sich, daß auch kleinere oder größere Anteile von anderen Verbindungen der Formel I'' (X' $\neq$ CN) in Frage kommen. Für MFK-Anwendungen enthalten die erfindungsgemäßen Medien vorzugsweise nur bis zu ca. 10 % an Nitrilen der Formel I'' (vorzugsweise jedoch keine Nitrile der Formel I'', sondern Verbindungen der Formel I' mit X' = Halogen, $CF_3$, $OCF_3$ oder $OCHF_2$). Diese Medien basieren vorzugsweise auf den Verbindungen der Formeln II bis

Der Aufbau der erfindungsgemäßen STN- bzw. MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden. C bedeutet eine kristalline, S eine smektische, $S_B$ eine smektisch B, N eine nematische und I die isotrope Phase.

$V_{10}$ bezeichnet die Spannung für 10 % Transmission (Blickrichtung senkrecht zur Plattenoberfläche). $t_{on}$ bezeichnet die Einschaltzeit und $t_{off}$ die Ausschaltzeit bei einer Betriebsspannung entsprechend dem 2,5-fachen Wert von $V_{10}$ • n bezeichnet die optische Anisotropie und $n_o$ den Brechungsindex. $\Delta\epsilon$ bezeichnet die dielektrische Anisotropie ($\Delta\epsilon = \epsilon_{\parallel} - \epsilon_{\perp}$, wobei $\epsilon_{\parallel}$ die Dielektrizitätskonstante parallel zu den Moleküllängs-

achsen und $\epsilon_\perp$ die Dielektrizitätskonstante senkrecht dazu bedeutet. Die elektrooptischen Daten wurden in einer TN-Zelle im 1. Minimum (d.h. bei einem d • Δn-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

Die folgenden Beispiele sollen die Erfindung erläutern, ohne sie zu begrenzen. Vor und nachstehend sind alle Temperaturen in °C angegeben. Die Prozentzahlen sind Gewichtsprozente.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Rest $C_nH_{2n+1}$ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten $R^1$, $R^2$, $L^1$, $L^2$ und $L^3$:

| Code für $R^1$, $R^2$, $L^1$, $L^2$ | $R^1$ | $R^2$ | $L^1$ | $L^2$ | $L^3$ |
|---|---|---|---|---|---|
| nm | $C_nH_{2n+1}$ | $C_mH_{2m+1}$ | H | H | H |
| nOm | $C_nH_{2n+1}$ | $OC_mH_{2m+1}$ | H | H | H |
| nO.m | $OC_nH_{2n+1}$ | $C_mH_{2m+1}$ | H | H | H |
| n | $C_nH_{2n+1}$ | CN | H | H | H |
| nN.F | $C_nH_{2n+1}$ | CN | H | F | H |
| nF | $C_nH_{2n+1}$ | F | H | H | H |
| nOF | $OC_nH_{2n+1}$ | F | H | H | H |
| nCl | $C_nH_{2n+1}$ | Cl | H | H | H |
| nF.F | $C_nH_{2n+1}$ | F | H | F | H |
| nOmFF | $C_nH_{2n+1}$ | $OC_mH_{2m+1}$ | F | F | H |
| nmF | $C_nH_{2n+1}$ | $C_mH_{2m+1}$ | F | H | H |
| $nCF_3$ | $C_nH_{2n+1}$ | $CF_3$ | H | H | H |
| $nOCF_3$ | $C_nH_{2n+1}$ | $OCF_3$ | H | H | H |
| $nOCF_2$ | $C_nH_{2n+1}$ | $OCHF_2$ | H | H | H |
| nS | $C_nH_{2n+1}$ | NCS | H | H | H |
| rVsN | $C_rH_{2r+1}$-CH=CH-$C_sH_{2s}$- | CN | H | H | H |
| rEsN | $C_rH_{2r+1}$-O-$C_sH_{2s}$- | CN | H | H | H |
| nNF | $C_nH_{2n+1}$ | CN | F | H | H |
| nAm | $C_nH_{2n+1}$ | $COOC_mH_{2m+1}$ | H | H | H |
| nF.F.F | $C_nH_{2n+1}$ | F | H | F | F |
| nCl.F.F | $C_nH_{2n+1}$ | Cl | H | F | F |
| $nCF_3$.F.F | $C_nH_{2n+1}$ | $CF_3$ | H | F | F |
| $nOCF_3$.F.F | $C_nH_{2n+1}$ | $OCF_3$ | H | F | F |
| $nOCF_2$.F.F | $C_nH_{2n+1}$ | $OCHF_2$ | H | F | F |
| $nOCF_3$.F | $C_nH_{2n+1}$ | $OCF_3$ | H | F | H |

Tabelle A:

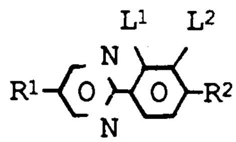

PYP

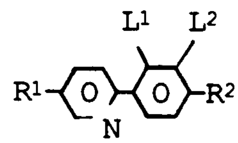

PYRP

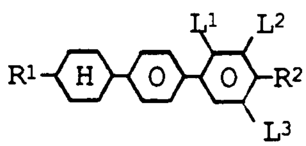

BCH

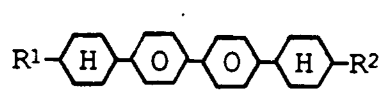

CBC

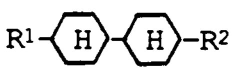

CCH

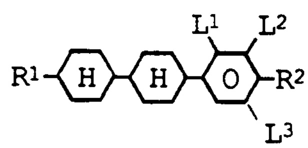

CCP

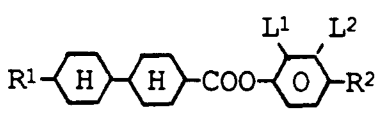

CP

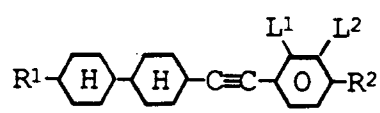

CPTP

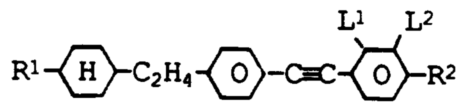

CEPTP

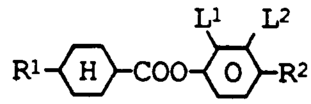

D

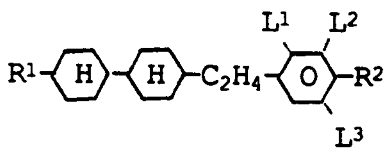

ECCP

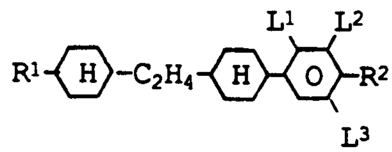

CECP

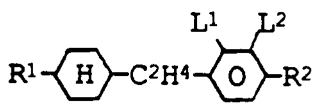

EPCH

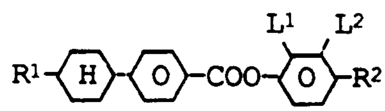

HP

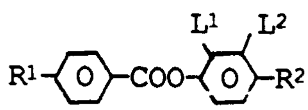

ME

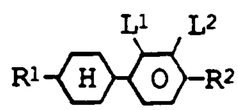

PCH

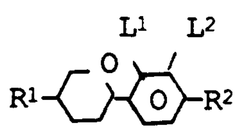

PDX

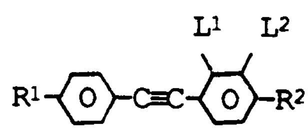

PTP

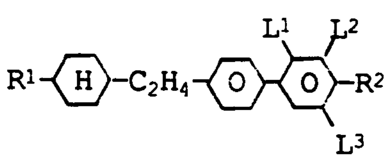

BECH

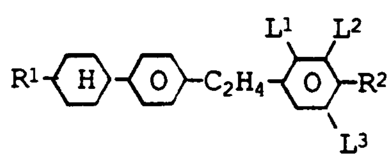

EBCH

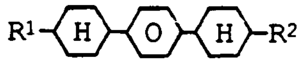

CPC

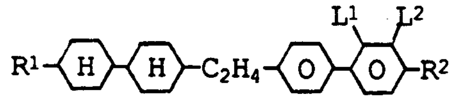

CCEB

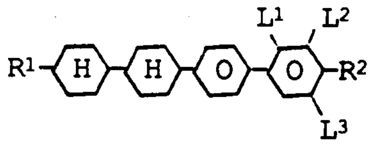

CCB

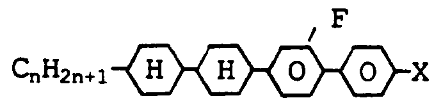

CCB-n.FX

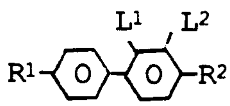

B

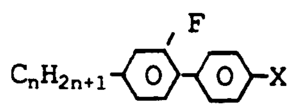

B-n.FX

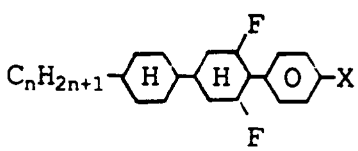

CUP-nX

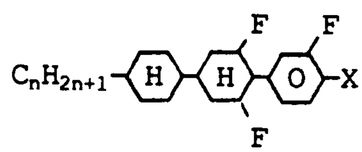

CUP-nX.F

Tabelle B:

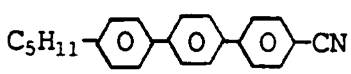

T15

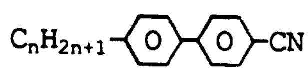

K3n

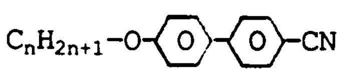

M3n

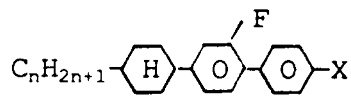

BCH-n.FX

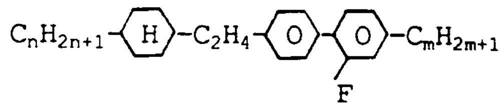

Inm

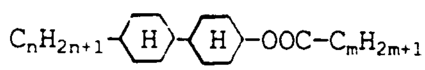

C-nm

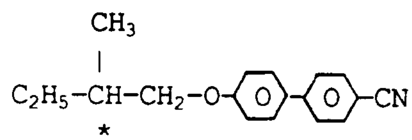

C15

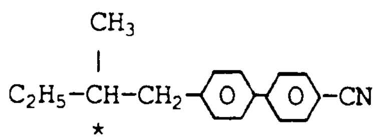

CB15

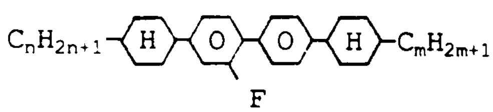

CBC-nmF

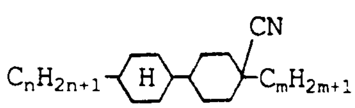

CCN-nm

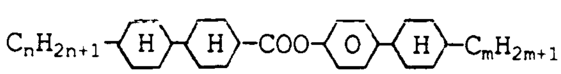

CCPC-nm

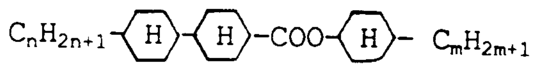

CH-nm

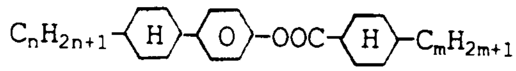

HD-nm

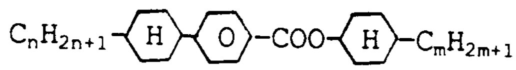

HH-nm

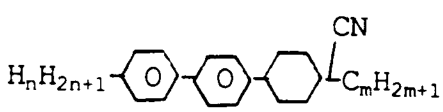

NCB-nm

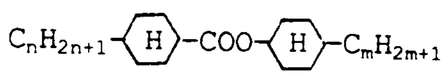

OS-nm

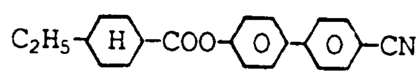

CHE

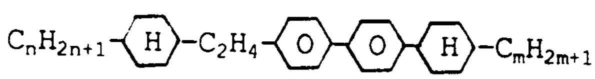

ECBC-nm

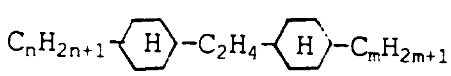

ECCH-nm

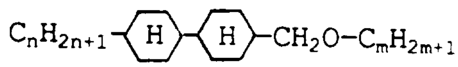

CCH-n1Em

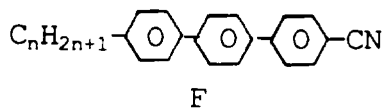

T-nFn

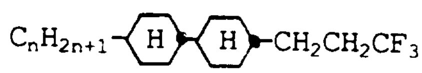

$CCH-n2CF_3$

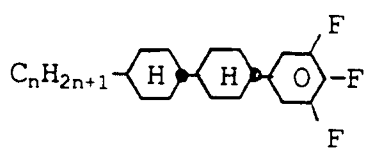

CCP-n.F.F.F

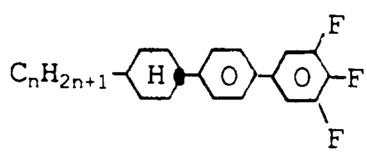

BCH-nF.F.F

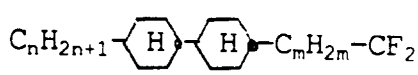

$CCH-nmCF_3$

| Beispiel 1 | |
|---|---|
| PCH-3 | 8 % |
| PCH-3Cl.F | 12 % |
| PCH-5Cl.F | 10 % |
| CCP-20CF$_3$ | 5 % |
| CCP-30CF$_3$ | 13 % |
| CCP-40CF$_3$ | 5 % |
| CCP-50CF$_3$ | 12 % |
| BCH-32 | 8 % |
| BCH-52 | 8 % |
| CCPC-33 | 4 % |
| CCPC-34 | 4 % |
| CCPC-35 | 4 % |
| PCH-5F | 7 % |

| Beispiel 2 | | |
|---|---|---|
| PCH-3Cl.F | 11 % | $T_c$ = 71 °C |
| PCH-5Cl.F | 10 % | $\Delta n$ = 0,09 |
| PCH-7F | 10 % | $\eta$ = 18 mPa.s |
| CCP-20CF$_3$ | 9 % | $V_{10}$ = 1,6 V |
| CCP-30CF$_3$ | 12 % | |
| CCP-40CF$_3$ | 7 % | |
| CCP-50CF$_3$ | 12 % | |
| BCH-3F.F | 10 % | |
| BCH-5F.F | 8 % | |
| BCH-3.FCF$_3$ | 5 % | |
| CCB-3.FF | 3 % | |
| CCB-5.FF | 3 % | |

| Beispiel 3 | |
|---|---|
| PCH-3Cl.F | 12 % |
| PCH-5Cl.F | 10 % |
| EPCH-3F.F | 10 % |
| EPCH-5F.F | 10 % |
| CCP-3F.F | 15 % |
| CCP-5F.F | 12 % |
| BCH-3F.F | 12 % |
| BCH-30CF$_3$ | 8 % |
| CCB-3.FF | 3 % |
| CCB-5F.F | 3 % |
| CBC-33F | 3 % |
| CBC-55F | 2 % |

| Beispiel 4 | |
|---|---|
| PCH-7F.F | 10 % |
| PCH-5F.F | 12 % |
| B-3F.F | 6 % |
| B-5F.F | 6 % |
| CCP-2F.F | 10 % |
| CCP-3F.F | 12 % |
| CCP-5F.F | 12 % |
| BCH-3F.F | 10 % |
| BCH-5F.F | 10 % |
| CCEB-3F.F | 3 % |
| CCEB-5F.F | 3 % |
| CBC-33F | 3 % |
| CBC-53F | 3 % |

| Beispiel 5 | |
|---|---|
| PCH-3Cl | 15 % |
| PCH-5Cl | 10 % |
| PCH-3Cl.F | 10 % |
| BECH-3F.F | 10 % |
| CCP-2F.F | 10 % |
| CCP-3F.F | 12 % |
| CCP-5F.F | 12 % |
| CCB-3.FF | 3 % |
| CCB-5.FF | 3 % |

| Beispiel 6 | |
|---|---|
| PCH-3Cl | 12 % |
| PCH-5Cl | 10 % |
| PCH-3Cl.F | 10 % |
| BECH-3F.F | 8 % |
| CCP-2F.F | 8 % |
| CCP-3F.F | 12 % |
| CCP-5F.F | 12 % |
| CCB-3.FF | 3 % |
| CCB-5.FF | 3 % |
| BCH-3F.F | 12 % |
| BCH-5F.F | 10 % |

| Beispiel 7 | | |
|---|---|---|
| PCH-5Cl | 12 % | |
| PCH-3Cl | 10 % | $T_c$ = 91 °C |
| PCH-3Cl.F | 10 % | $\Delta n$ = 0.09 |
| CCP-3Cl.F | 13 % | $\Delta\epsilon$ = +5 |
| ECCP-3F.F | 13 % | $V_{10}$ = 2.2 V |
| CBC-53F | 4 % | |
| CBC-33F | 3 % | |
| CBC-55F | 3 % | |
| CCP-5OCF$_3$ | 12 % | |
| ECCP-3OCF$_3$ | 11 % | |
| ECCP-5OCF$_3$ | 9 % | |

| Beispiel 8 | |
|---|---|
| PCH-5Cl | 10 % |
| PCH-3Cl.F | 8 % |
| PCH-5Cl.F | 8 % |
| CCP-2OCF$_2$.F | 10 % |
| CCP-3OCF$_2$.F | 12 % |
| CCP-5OCF$_2$.F | 12 % |
| BCH-3.FF | 6 % |
| BCH-3.FCF$_3$ | 8 % |
| BCH-3F.F | 10 % |
| CCB-2F.F | 3 % |
| CCB-3F.F | 3 % |
| CBC-33F | 3 % |
| CBC-53F | 4 % |
| CBC-55F | 3 % |

| Beispiel 9 | |
|---|---|
| PCH-3 | 9 % |
| PCH-3OCF$_2$ | 12 % |
| PCH-5OCF$_2$ | 10 % |
| PCH-3Cl.F | 8 % |
| ECCP-32 | 7 % |
| ECCP-33 | 7 % |
| BCH-3F.F | 15 % |
| CCPC-33 | 3 % |
| CCPC-34 | 3 % |
| CCPC-35 | 3 % |
| ECCP-3F.F | 13 % |
| ECCP-5F.F | 10 % |

| Beispiel 10 | |
|---|---|
| PCH-7Cl | 10 % |
| PCH-5Cl | 10 % |
| PCH-5Cl.F | 8 % |
| PCH-3OCF$_3$ | 6 % |
| PCH-5OCF$_3$ | 6 % |
| CCP-2Cl | 8 % |
| CCP-3Cl | 8 % |
| CCP-5F | 12 % |
| BCH-3F.F | 15 % |
| BCH-5F.F | 7 % |
| CCB-3F.F | 3 % |
| CCB-5F.F | 3 % |
| CBC-33F | 4 % |

| Beispiel 11 | | |
|---|---|---|
| PCH-5F.F | 6 % | $T_c$ = 82 °C |
| PCH-6F.F | 3 % | $\eta$ = 17 mPa.s |
| PCH-7F.F | 6 % | $V_{th}$ = 1,8 V |
| CCP-3F.F | 12 % | $\Delta n$ = 0,089 |
| CCP-5F.F | 11 % | |
| CECP-2F.F | 14 % | |
| CECP-3F.F | 12 % | |
| CECP-5F.F | 11 % | |
| BCH-3F.F | 14 % | |
| BCH-5F.F | 11 % | |

| Beispiel 12 | | |
|---|---|---|
| PCH-5F.F | 5 % | $T_c$ = 78 °C |
| PCH-7F.F | 7 % | $\eta$ = 17 mPa.s |
| CCP-3F.F | 10 % | $V_{10}$ = 1,8 V |
| CCP-5F.F | 8 % | $\Delta n$ = 0,085 |
| CECP-2F.F | 10 % | |
| CECP-3F.F | 12 % | |
| CECP-5F.F | 9 % | |
| CCP-3F.F.F | 10 % | |
| CCP-5F.F.F | 10 % | |
| BCH-4F.F.F | 10 % | |
| BCH-5F.F.F | 9 % | |

| Beispiel 13 | | |
|---|---|---|
| PCH-5F.F<br>CCP-3F.F<br>CCP-5F.F<br>CECP-2F.F<br>CECP-3F.F<br>CECP-5F.F<br>CCP-3F.F.F<br>CCP-5F.F.F<br>BCH-3F.F.F<br>BCH-5F.F.F | 6 %<br>10 %<br>8 %<br>12 %<br>14 %<br>11 %<br>10 %<br>10 %<br>10 %<br>9 % | $T_c$ = 88 °C<br>$\eta$ = 19 mPa.s<br>$V_{10}$ = 1,9 V<br>$\Delta n$ = 0,089 |

| Beispiel 14 | | |
|---|---|---|
| PCH-5F.F<br>PCH-7F.F<br>CCP-3OCF$_3$<br>CCP-5OCF$_3$<br>ECCP-2F.F<br>ECCP-3F.F<br>ECCP-5F.F<br>CCP-3CF$_3$.F<br>CCP-5CF$_3$.F<br>BCH-3F.F.F<br>BCH-5F.F.F | 6 %<br>6 %<br>10 %<br>8 %<br>10 %<br>12 %<br>9 %<br>10 %<br>10 %<br>10 %<br>9 % | $T_c$ = 89 °C<br>$\eta$ = 20 mPa.s<br>$V_{10}$ = 1,85 V<br>$\Delta n$ = 0,087 |

| Beispiel 15 | | |
|---|---|---|
| PCH-5F.F<br>PCH-7F.F<br>CCP-3OCF$_3$<br>CCP-5OCF$_3$<br>ECCP-3F.F<br>ECCP-5F.F<br>CCP-3CF$_3$.F<br>CCP-5CF$_3$.F<br>BCH-3F.F.F<br>BCH-4F.F.F<br>BCH-5F.F.F | 6 %<br>6 %<br>10 %<br>8 %<br>12 %<br>9 %<br>10 %<br>10 %<br>10 %<br>10 %<br>9 % | $T_c$ = 87 °C<br>$\eta$ = 20 mPa.s<br>$V_{10}$ = 1,8 V<br>$\Delta n$ = 0,093 |

| Beispiel 16 | | |
|---|---|---|
| PCH-5F.F | 6 % | $T_c$ = 85 °C |
| PCH-7F.F | 6 % | $\eta$ = 18 mPa.s |
| ECCP-2F.F | 12 % | $V_{10}$ = 1,9 V |
| ECCP-3F.F | 13 % | $\Delta n$ = 0,093 |
| ECCP-5F.F | 9 % | |
| CCP-3F.F.F | 11 % | |
| CCP-5F.F.F | 10 % | |
| BCH-2F.F | 12 % | |
| BCH-3F.F | 12 % | |
| BCH-5F.F | 9 % | |

| Beispiel 17 | | |
|---|---|---|
| PCH-5F.F | 10 % | $T_c$ = 81 °C |
| ECCP-3F.F | 12 % | $\eta$ = 18 mPa.s |
| ECCP-5F.F | 10 % | $V_{10}$ = 1,9 V |
| CCP-2F.F.F | 8 % | $\Delta n$ = 0,092 |
| CCP-3F.F.F | 10 % | |
| CCP-4F.F.F | 8 % | |
| CCP-5F.F.F | 9 % | |
| BCH-2F.F | 12 % | |
| BCH-3F.F | 12 % | |
| BCH-5F.F | 9 % | |

| Beispiel 18 | | |
|---|---|---|
| PCH-5Cl.F | 6 % | $T_c$ = 83 °C |
| PCH-6Cl.F | 3 % | $\eta$ = 19 mPa.s |
| PCH-7Cl.F | 6 % | $V_{th}$ = 1,85 V |
| CCP-3F.F | 12 % | $\Delta n$ = 0,093 |
| CCP-5F.F | 11 % | |
| CECP-2F.F | 14 % | |
| CECP-3F.F | 12 % | |
| ECCP-5F.F | 11 % | |
| BCH-3F.F | 14 % | |
| BCH-5F.F | 11 % | |

| Beispiel 19 | | |
|---|---|---|
| PCH-5Cl.F | 5 % | $T_c$ = 81 °C |
| PCH-7Cl.F | 7 % | $\eta$ = 20 mPa.s |
| CCP-3F.F | 10 % | $V_{10}$ = 1,9 V |
| CCP-5F.F | 8 % | $\Delta n$ = 0,092 |
| CECP-2F.F | 10 % | |
| CECP-3F.F | 12 % | |
| CECP-5F.F | 9 % | |
| CCP-3F.F.F | 10 % | |
| CCP-5F.F.F | 10 % | |
| BCH-3F.F.F | 10 % | |
| BCH-5F.F.F | 9 % | |

| Beispiel 20 | | |
|---|---|---|
| PCH-5Cl.F | 6 % | $T_c$ - 88 °C |
| PCH-7Cl.F | 6 % | $\eta$ = 21 mPa.s |
| ECCP-2F.F | 12 % | $V_{10}$ = 2,0 V |
| ECCP-3F.F | 13 % | Δn = 0,099 |
| ECCP-5F.F | 9 % | |
| CCP-3F.F.F | 11 % | |
| CCP-5F.F.F | 10 % | |
| BCH-2F.F | 12 % | |
| BCH-3F.F | 12 % | |
| BCH-5F.F | 9 % | |

| Beispiel 21 | | |
|---|---|---|
| PCH-5Cl.F | 5 % | $T_c$ = 76 °C |
| PCH-7Cl.F | 6 % | $V_{10}$ = 1,58 V |
| CCP-2$CF_3$.F.F | 8 % | Δn = 0,098 |
| CCP-3$CF_3$.F.F | 10 % | |
| CCP-5$CF_3$.F.F | 8 % | |
| CCP-2Cl.F.F | 14 % | |
| CCP-3Cl.F.F | 12 % | |
| CCP-5Cl.F.F | 12 % | |
| BCH-3F.F | 15 % | |
| BCH-5F.F | 10 % | |

| Beispiel 22 | | |
|---|---|---|
| PCH-5F.F | 5 % | $T_c$ = 66 °C |
| PCH-6F.F | 3 % | $\eta$ = 21 mPa.s |
| PCH-7F.F | 4 % | Δn = 0,090 |
| CCP-20$CF_3$.F | 9 % | $V_{10}$ = 1,4 V |
| CCP-3O$CF_3$.F | 12 % | |
| CCP-4O$CF_3$.F | 10 % | |
| CCP-5O$CF_3$.F | 12 % | |
| CUP-2F | 6 % | |
| CUP-2F | 9 % | |
| CUP-5F | 11 % | |
| CEUP-3F | 10 % | |
| CEUP-5F | 9 % | |

| Beispiel 23 | | |
|---|---|---|
| PCH-5F.F | 5 % | $T_c$ = 95 °C |
| PCH-7F.F | 6 % | Δn = 0,090 |
| CCP-2OCF$_3$.F | 7 % | $V_{10}$ = 1,85 V |
| CCP-3OCF$_3$.F | 10 % | |
| CCP-5OCF$_3$.F | 9 % | |
| CUP-3F | 12 % | |
| CUP-5F | 12 % | |
| CEUP-3F | 11 % | |
| CEUP-5F | 12 % | |
| CCB-3.FOCF$_3$ | 6 % | |
| CCB-4.FOCF$_3$ | 5 % | |
| CCB-5.FOCF$_3$ | 5 % | |

| Beispiel 24 | | |
|---|---|---|
| PCH-5Cl.F | 5 % | $T_c$ = 97 °C |
| PCH-7Cl.F | 6 % | Δn = 0,099 |
| CCP-2OCF$_3$.F | 7 % | $V_{10}$ = 1,8 V |
| CCP-5OCF$_3$.F | 10 % | |
| CCP-5OCF$_3$.F | 9 % | |
| CUP-3F | 12 % | |
| CUP-5F | 12 % | |
| CEUP-3F | 11 % | |
| CEUP-5F | 12 % | |
| CCB-3.FOCF$_3$ | 6 % | |
| CCB-4.FOCF$_3$ | 5% | |
| CCB-5.FOCF$_3$ | 5 % | |

| Beispiel 25 | | |
|---|---|---|
| PCH-5F.F | 8 % | $T_c$ = 80 °C |
| PCH-7F.F | 8 % | $\eta$ = 19 mPa.s |
| CCP-2F.F | 8 % | Δn = 0,078 |
| CCP-3F.F | 12 % | $V_{10}$ = 1,55 V |
| CCP-5F.F | 12 % | |
| CECP-3F.F | 10 % | |
| CECP-5F.F | 9 % | |
| ECCP-2F.F | 12 % | |
| ECCP-3F.F | 12 % | |
| ECCP-5F.F | 9 % | |

| Beispiel 26 | | |
|---|---|---|
| PCH5F.F | 7 % | $T_c$ = 83 °C |
| PCH5F.F | 6 % | $\eta$ = 17 mPa.s |
| CCP-2OCF$_3$.F | 11 % | $\Delta n$ = 0,093 |
| CCP-3OCF$_3$.F | 12 % | $V_{10}$ = 1,65 V |
| CCP-4OCF$_3$.F | 9 % | |
| CCP-5OCF$_3$.F | 11 % | |
| ECCP-2F.F | 9 % | |
| ECCP-3F.F | 8 % | |
| ECCP-5F.F | 9 % | |
| BCH-3CF$_3$.F.F | 12 % | |
| BCH-5CF$_3$.F.F | 9 % | |

## Patentansprüche

1. Flüssigkristallines Medium auf der Basis eines Gemisches von polaren Verbindungen mit positiver dielektrischer Anisotropie, dadurch gekennzeichnet, daß es eine oder mehrere Verbindungen der allgemeinen Formel I

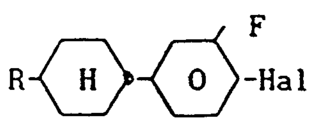

I

enthält, worin Hal Fluor oder Chlor und R Alkyl, Oxaalkyl, Fluoralkyl oder Alkenyl mit jeweils bis zu 7 C-Atomen bedeutet, und
zusätzlich eine oder mehrere Verbindungen ausgewählt aus der Gruppe bestehend aus den allgemeinen Formeln II, III und IV enthält:

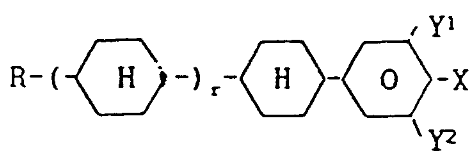

II

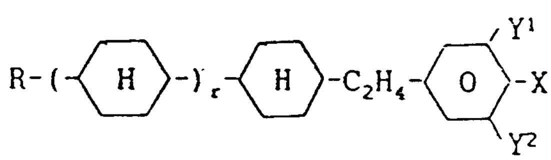

III

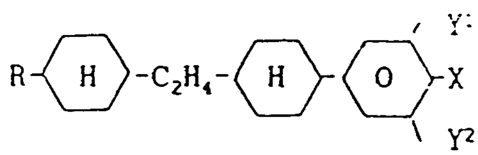

IV

worin die einzelnen Reste die folgenden Bedeutungen haben:

R: Alkyl, Oxaalkyl, Fluoralkyl oder Alkenyl mit jeweils bis zu 7 C-Atomen
X: F, Cl, $CF_3$, $OCF_3$ oder $OCHF_2$
$Y^1$ und $Y^2$ jeweils unabhängig voneinander H oder F

r: 0 oder 1.

2. Medium nach Anspruch 1, dadurch gekennzeichnet, daß es gegebenenfalls eine oder mehrere Verbindungen ausgewählt aus der Gruppe bestehend aus den allgemeinen Formeln V bis VIII enthält:

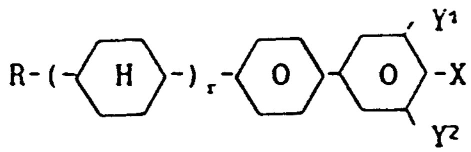 V

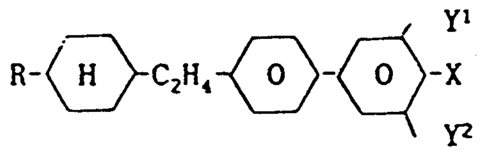 VI

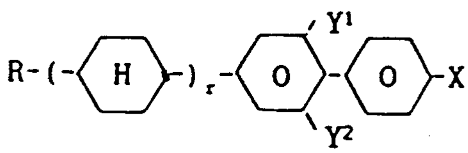 VII

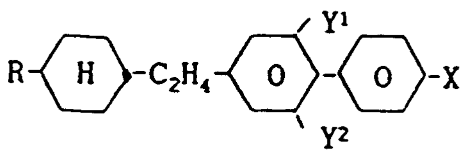 VIII

worin die einzelnen Reste die folgenden Bedeutungen haben:

R: Alkyl, Oxaalkyl, Fluoralkyl oder Alkenyl mit jeweils bis zu 7 C-Atomen
X: F, Cl, $CF_3$, $OCF_3$ oder $OCHF_2$
$Y^1$ und $Y^2$ jeweils unabhängig voneinander H oder F
r: 0 oder 1.

3. Medium nach Anspruch 1 oder 2, dadurch gekennzeichnet, daß es gegebenenfalls eine oder mehrere Verbindungen ausgewählt aus der Gruppe bestehend aus den allgemeinen Formeln IX bis XIV enthält:

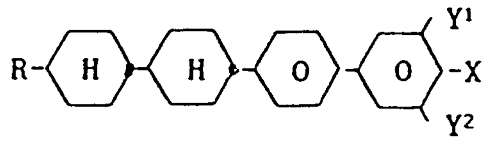

IX

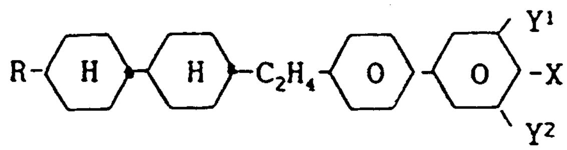

X

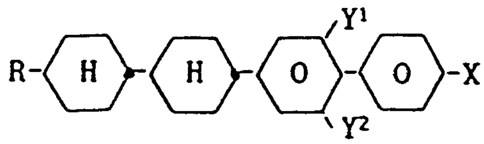

XI

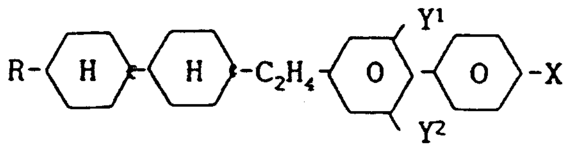

XII

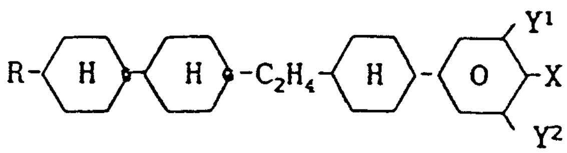

XIII

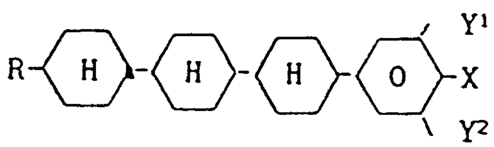

XIV

worin R, X, $Y^1$ und $Y^2$ jeweils unabhängig voneinander eine der in Anspruch 2 angegebenen Bedeutungen haben.

**4.** Medium nach einen der Ansprüche 1 bis 3, dadurch gekennzeichnet, daß es gegebenenfalls eine Komponente A enthält bestehend aus einer oder mehreren Verbindungen mit einer dielektrischen Anisotropie von -1,5 bis +1,5 der allgemeinen Formel I',

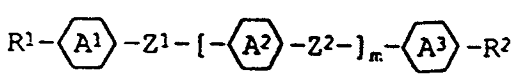

I'

worin

| | |
|---|---|
| $R^1$ und $R^2$ | jeweils unabhängig voneinander n-Alkyl, n-Alkoxy, ω-Fluor-alkyl oder n-Alkenyl mit bis zu 9 C-Atomen, |
| die Ringe $A^1$, $A^2$ und $A^3$ | jeweils unabhängig voneinander 1,4-Phenylen, 2- oder 3-Fluor-1,4-phenylen, trans-1,4-Cyclohexylen oder 1,4-Cyclohexenylen, |
| $Z^1$ und $Z^2$ | jeweils unabhängig voneinander $-CH_2CH_2-$, -C≡O-, -CO-O-, -O-CO-, oder eine Einfachbindung, |

und

m 0, 1 oder 2 bedeutet.

**5.** Medium nach einem der Ansprüche 1 bis 4, dadurch gekennzeichnet, daß es gegebenenfalls eine oder mehrere Verbindungen der Formel I" enthält,

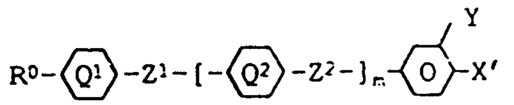

I"

worin $Z^1$, $Z^2$ und m die in Anspruch 4 angegebene Bedeutung haben, $Q^1$ und $Q^2$ jeweils unabhängig voneinander 1,4-Phenylen, trans-1,4-Cyclohexylen oder 3-Fluor-1,4-phenylen oder einer der Reste $Q^1$ und $Q^2$ auch trans-1,3-Dioxan-2,5-diyl, Pyrimidin-2,5-diyl, Pyridin-2,5-diyl oder 1,4-Cyclohexenylen bedeutet,
$R^0$ n-Alkyl, n-Alkenyl, n-Alkoxy oder n-Oxaalkyl mit jeweils bis zu 9 C-Atomen, Y H oder F und X' CN, Halogen, $CF_3$, $OCF_3$ oder $OCHF_2$ ist.

**6.** Medium nach Anspruch 4, dadurch gekennzeichnet, daß Komponente A eine Verbindung der Formel II6

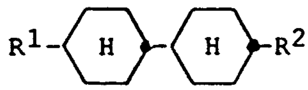

II6

ist, worin
$R^1$ und $R^2$ die in Anspruch 4 angegebene Bedeutung haben.

**7.** Medium nach Anspruch 6, dadurch gekennzeichnet, daß es gegebenenfalls eine oder mehrere Verbindungen der Formel I" enthält,

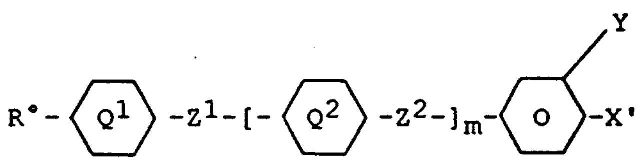

I''

worin
R°, $Q^1$, $Q^2$, $Z^1$, $Z^2$, Y, X' und m die in Anspruch 5 angegebene Bedeutung haben.

**8.** Medium nach Anspruch 1 oder 2, dadurch gekennzeichnet, daß $Y^2$ H ist.

**9.** Medium nach Anspruch 1, dadurch gekennzeichnet, daß der Anteil an Verbindungen der Formeln I bis IV zusammen im Gesamtgemisch mindestens 50 Gew.-% beträgt.

**10.** Medium nach Anspruch 1 , dadurch gekennzeichnet, daß der Anteil an Verbindungen der Formel I im Gesamtgemisch 10 bis 50 Gew.-% betragt.

**11.** Medium nach mindestens einem der Ansprüche 1 bis 8, dadurch gekennzeichnet, daß der Anteil an Verbindungen der Formeln II bis IV im Gesamtgemisch 30 bis 70 Gew.-% beträgt.

**12.** Medium nach mindestens einem der Ansprüche 1 bis 8, dadurch gekennzeichnet, daß es im wesentlichen aus Verbindungen ausgewählt aus der Gruppe bestehend aus den allgemeinen Formeln I bis XIV besteht.

**13.** Verwendung des flüssigkristallinen Mediums nach Anspruch 1 für elektrooptische Zwecke.

**14.** Elektrooptische Flüssigkristallanzeige enthalten ein flüssigkristallines Medium nach Anspruch 1.

## Claims

1. Liquid-crystalline medium based on a mixture of polar compounds having positive dielectric anisotropy, characterized in that it contains one or more compounds of the general formula I

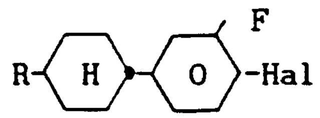

I

in which Hal is fluorine or chlorine and R is alkyl, oxaalkyl, fluoroalkyl or alkenyl, in each case having up to 7 carbon atoms, and additionally contains one or more compounds selected from the group comprising the general formulae II, III and IV:

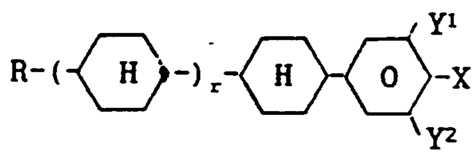

II

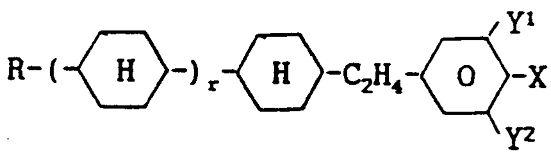

III

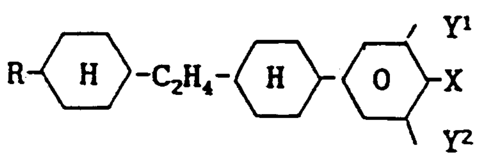

IV

in which the individual radicals are as defined below:

| | |
|---|---|
| R: | alkyl, oxaalkyl, fluoroalkyl or alkenyl, in each case having up to 7 carbon atoms |
| X: | F, Cl, $CF_3$, $OCF_3$ or $OCHF_2$ |
| $Y^1$ and $Y^2$ | in each case independently of each other H or F |
| r: | 0 or 1. |

2. Medium according to Claim 1, characterized in that it optionally contains one or more compounds selected from the group comprising the general formulae V to VIII:

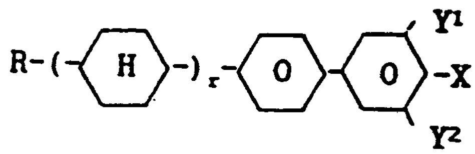

V

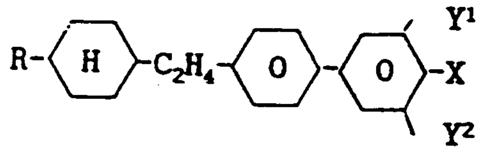

VI

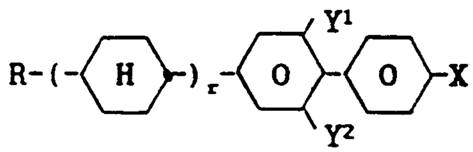

VII

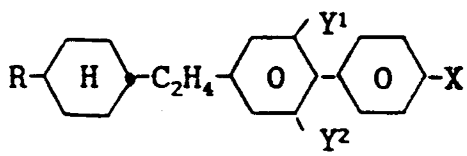

VIII

in which the individual radicals are as defined below:

R: alkyl, oxaalkyl, fluoroalkyl or alkenyl, in each case having up to 7 carbon atoms

X: F, Cl, $CF_3$, $OCF_3$ or $OCHF_2$

$Y^1$ and $Y^2$ in each case independently of each other H or F

r: 0 or 1.

**3.** Medium according to Claim 1 or 2, characterized in that it optionally contains one or more compounds selected from the group comprising the general formulae IX to XIV:

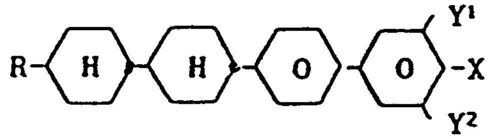

IX

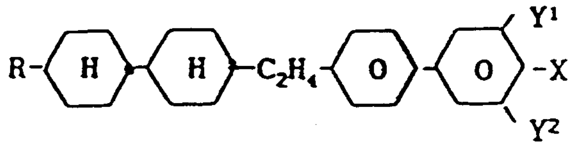

X

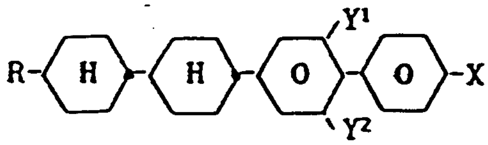

XI

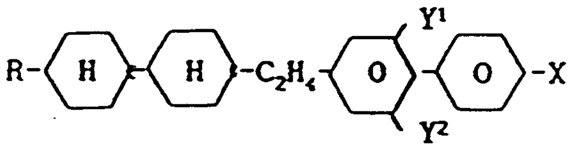

XII

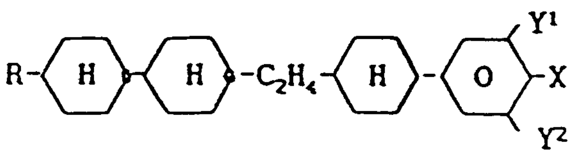

XIII

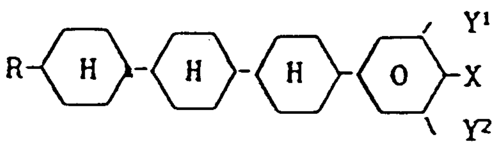

XIV

in which R, X, $Y^1$ and $Y^2$ are each, independently of each other, as defined in Claim 2.

**4.** Medium according to one of Claims 1 to 3, characterized in that it optionally contains a component A comprising one or more compounds of the general formula I' having a dielectric anisotropy of from -1.5 to +1.5

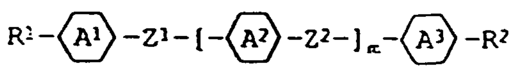

I'

in which

| | |
|---|---|
| $R^1$ and $R^2$ | are each, independently of each other, n-alkyl, n-alkoxy, ω-fluoroalkyl or n-alkenyl having up to 9 carbon atoms, |
| the rings $A^1$, $A^2$ and $A^3$ | are each, independently of one another, 1,4-phenylene, 2- or 3-fluoro-1,4-phenylene, trans-1,4-cyclohexylene or 1,4-cyclohexenylene, |
| $Z^1$ and $Z^2$ | are each, independently of each other, $-CH_2CH_2-$ -C≡C-, -CO-O-, -O-CO- or a single bond, |

and

m is 0, 1 or 2.

**5.** Medium according to one of Claims 1 to 4, characterized in that it optionally contains one or more compounds of the formula I''

I"

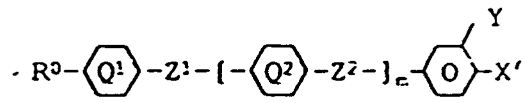

in which $Z^1$, $Z^2$ and m are as defined in Claim 4, $Q^1$ and $Q^2$ are each, independently of each other, 1,4-phenylene, trans-1,4-cyclohexylene or 3-fluoro-1,4-phenylene, or one of the radicals $Q^1$ and $Q^2$ is alternatively trans-1,3-dioxane-2,5-diyl, pyrimidine-2,5-diyl, pyridine-2,5-diyl or 1,4-cyclohexenylene, $R^0$ is n-alkyl, n-alkoxy or n-oxaalkyl, in each case having up to 9 carbon atoms, Y is H or F and X' is CN, halogen, $CF_3$, $OCF_3$ or $OCHF_2$.

6. Medium according to Claim 4, characterized in that component A is a compound of the formula II6

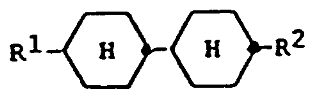

II6

in which
$R^1$ and $R^2$ are as defined in Claim 4.

7. Medium according to Claim 6, characterized in that it optionally contains one or more compounds of the formula I'',

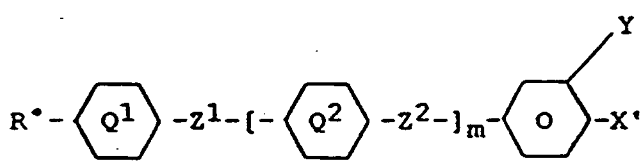

I''

in which
$R^o$, $Q^1$, $Q^2$, $Z^1$, $Z^2$, Y, X' and m are as defined in Claim 5.

8. Medium according to Claim 1 or 2, characterized in that $Y^2$ is H.

9. Medium according to Claim 1, characterized in that the proportion of compounds of the formulae I to IV together is at least 50% by weight in the total mixture.

10. Medium according to Claim 1, characterized in that the proportion of compounds of the formula I is from 10 to 50% by weight in the total mixture.

11. Medium according to at least one of Claims 1 to 8, characterized in that the proportion of compounds of the formulae II to IV is from 30 to 70% by weight in the total mixture.

12. Medium according to at least one of Claims 1 to 8, characterized in that it essentially comprises compounds selected from the group comprising the general formulae I to XIV.

13. Use of the liquid-crystalline medium according to Claim 1 for electrooptical purposes.

14. Electrooptical liquid-crystal display containing a liquid-crystalline medium according to Claim 1.

## Revendications

**1.** Milieu à cristaux liquides à base d'un mélange de composés polaires à anisotropie diélectrique positive, caractérisé en ce qu'il contient un ou plusieurs composés de formule générale I

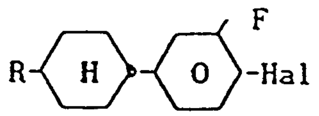
I

dans laquelle Hal représente le fluor ou le chlore, et R représente un groupe alkyle, oxa-alkyle, fluoro-alkyle ou alcényle ayant chacun jusqu'à 7 atomes de carbone, et en outre un ou plusieurs composés choisi(s) parmi ceux de formules générales II, III et IV:

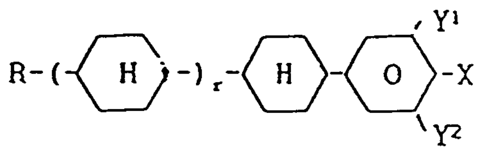
II

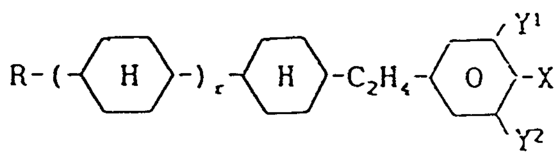
III

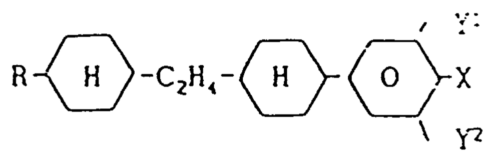
IV

dans lesquelles les radicaux individuels ont les significations suivantes:

| | |
|---|---|
| R: | un groupe alkyle, oxa-alkyle, fluoro-alkyle ou alcényle ayant chacun jusqu'à 7 atomes de carbone, |
| X: | F, Cl, $CF_3$, $OCF_3$ ou $OCHF_2$, |
| $Y^1$ et $Y^2$ | représentent chacun, indépendamment l'un de l'autre, H ou F, |
| r: | 0 ou 1. |

**2.** Milieu selon la revendication 1, caractérisé en ce qu'il contient éventuellement un ou plusieurs composés choisi(s) parmi ceux de formules générales V à VIII:

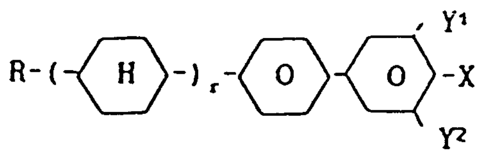

V

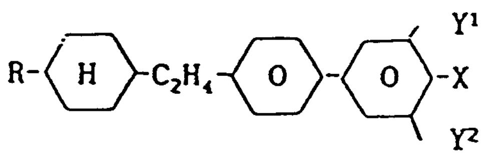

VI

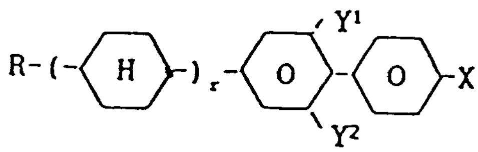

VII

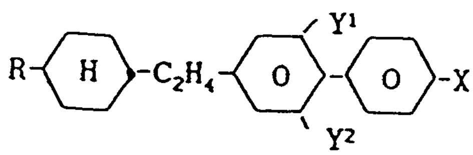

VIII

dans lesquelles les radicaux individuels ont les significations suivantes:

- R: un groupe alkyle, oxa-alkyle, fluoro-alkyle ou alcényle ayant chacun jusqu'à 7 atomes de carbone,
- X: F, Cl, $CF_3$, $OCF_3$ ou $OCHF_2$,
- $Y^1$ et $Y^2$ représentent chacun, indépendamment l'un de l'autre, H ou F,
- r: 0 ou 1.

**3.** Milieu selon la revendication 1 ou 2, caractérisé en ce qu'il contient éventuellement un ou plusieurs composés choisi(s) parmi ceux de formules générales IX à XIV:

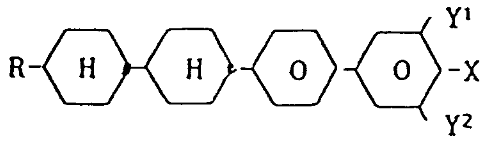

IX

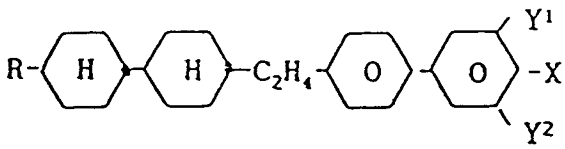

X

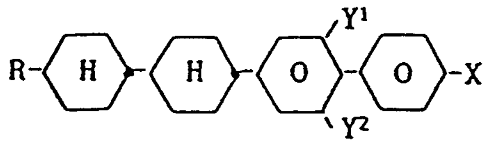

XI

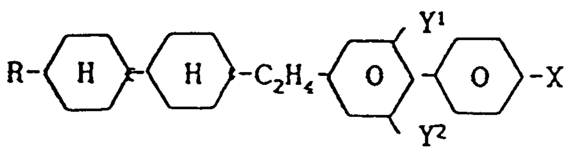

XII

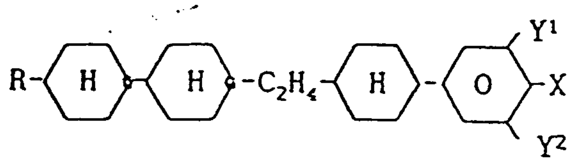

XIII

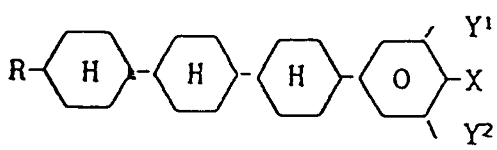

XIV

dans lesquelles R, X, $Y^1$ et $Y^2$ ont chacun, indépendamment les uns des autres, l'une des significations données dans la revendication 2.

**4.** Milieu selon l'une des revendications 1 à 3, caractérisé en ce qu'il contient éventuellement un composant A qui consiste en un ou plusieurs composés ayant une anisotropie diélectrique de -1,5 à +1,5, de formule générale I'

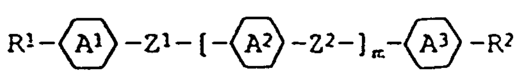

I'

dans laquelle

$R^1$ et $R^2$ représentent chacun, indépendamment l'un de l'autre, un groupe n-alkyle, n-alcoxy, ω-fluoroalkyle ou n-alcényle ayant jusqu'à 9 atomes de carbone,

les cycles $A^1$, $A^2$ et $A^3$ représentent chacun, indépendamment les uns des autres, le groupe 1,4-phénylène, 2- ou 3-fluoro-1,4-phénylène, *trans*-1,4-cyclohexylène ou 1,4-cyclohexénylène,

$Z^1$ et $Z^2$ représentent chacun, indépendamment l'un de l'autre, le groupe $-CH_2CH_2-$, -C≡C-, -CO-O- ou une simple liaison,

et

m est 0, 1 ou 2.

**5.** Milieu selon l'une des revendications 1 à 4, caractérisé en ce qu'il contient éventuellement un ou plusieurs composés de formule I'',

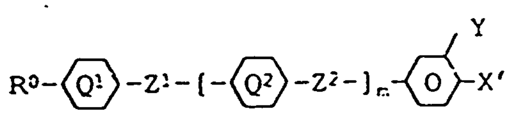 I''

dans laquelle $Z^1$, $Z^2$ et m ont les significations données dans la revendication 4, $Q^1$ et $Q^2$ représentent chacun, indépendamment l'un de l'autre, le groupe 1,4-phénylène, *trans*-1,4-cyclohexylène ou 3-fluoro-1,4-phénylène, ou l'un des radicaux $Q^1$ et $Q^2$ représente également le groupe *trans*-1,3-dioxanne-2,5-diyle, pyrimidine-2,5-diyle, pyridine-2,5-diyle ou 1,4-cyclohexénylène, $R^o$ est un groupe n-alkyle, n-alcényle, n-alcoxy ou n-oxa-alkyle ayant chacun jusqu'à 9 atomes de carbone, Y est H ou F, et X' est CN, un atome d'halogène, $CF_3$, $OCF_3$ ou $OCHF_2$.

**6.** Milieu selon la revendication 4, caractérisé en ce que le composant A est un composé de formule II6

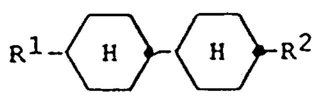 II6

dans laquelle $R^1$ et $R^2$ ont les significations données dans la revendication 4.

**7.** Milieu selon la revendication 6, caractérisé en ce qu'il contient un ou plusieurs composés de formule I'',

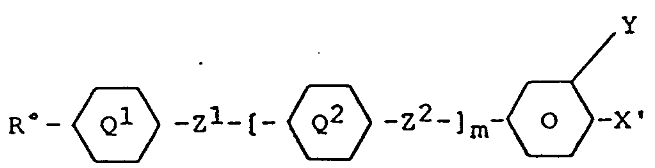 I''

dans laquelle $R^o$, $Q^1$, $Q^2$, $Z^1$, $Z^2$, Y, X' et m ont les significations données dans la revendication 5.

**8.** Milieu selon la revendication 1 ou 2, caractérisé en ce que $Y^2$ est H.

**9.** Milieu selon la revendication 1, caractérisé en ce que la proportion des composés de formules I à IV ensemble dans le mélange total est d'au moins 50 % en poids.

**10.** Milieu selon la revendication 1, caractérisé en ce que la proportion des composés de formule I ensemble dans le mélange total va de 10 à 50 % en poids.

**11.** Milieu selon au moins l'une des revendication 1 à 8, caractérisé en ce que la proportion des composés de formules II à IV ensemble dans le mélange total va de 30 à 70 % en poids.

**12.** Milieu selon au moins l'une des revendications 1 à 8, caractérisé en ce qu'il consiste essentiellement en composés choisis parmi ceux de formules I à XIV.

**13.** Utilisation du milieu à cristaux liquides selon la revendication 1, à des fins électro-optiques.

**14.** Afficheur électro-optique à cristaux liquides, contenant un milieu à cristaux liquides selon la revendication 1.